# EUROPEAN PATENT APPLICATION

(11) **EP 4 592 256 A1**
(43) Date of publication of application: **30.07.2025**
(21) Application number: 25152071.4
(22) Date of filing: 15.01.2025
(51) Int. Cl.: C02F 3/00, C02F 3/30

(54) **METHODS OF OPTIMIZING AERATION IN WASTEWATER TREATMENT**

(30) Priority: 17.01.2024 US 202418414566
(71) Applicant: Park, Jae Kwang, Verona, WI 53593 (US)
(72) Inventor: Park, Jae Kwang, Verona, WI 53593 (US)
(74) Representative: Reddie & Grose LLP

(57) **Abstract**

This disclosure includes systems and methods for optimizing aeration in wastewater treatment. The techniques described herein include receiving data for a wastewater treatment plant, the data being descriptive of water quality over a period of time. The techniques further include developing a predictive model for future water quality based on the received data. The techniques also include determining, based on the predictive model, a plurality of DO setpoints and airflow rates for the wastewater treatment plant. The techniques further include controlling an aeration system for the wastewater treatment plant using the plurality of DO setpoints and the airflow rates.

## Description

### Field

The disclosure relates to optimizing aeration control systems in wastewater treatment.

### Background

Wastewater operations present a significant financial burden for communities, prompting a focus on energy-saving measures to unlock substantial environmental, economic, and social advantages. Municipal wastewater treatment facilities across the United States consume over 30 terawatt-hours of electricity annually, equating to approximately $2 billion in electric costs (U.S. Department of Energy, 2023). This electricity expense alone can account for 25% to 40% of the annual operational budget of a wastewater treatment plant and 15% to 30% of a municipality's total energy expenditure.

Globally, wastewater treatment plants are energy intensive, consuming about 1% to 3% of the world's energy output. State-of-the-art facilities consume approximately 20~45 kWh per population equivalent (PE) connected, with more than half of this energy used for aeration during activated sludge treatment. Researchers worldwide are striving to decrease this energy usage.

Alarming statistics by the United Nations (UN) reveal that about 4.5 billion individuals lack access to safely managed sanitation, and a staggering 80% of the world's wastewater is discharged untreated. In response, the UN's Sustainable Development Goal 6 (SDG 6) emphasizes targets like providing sanitation for all (target 6.2) and halving untreated wastewater (target 6.3). However, meeting these goals could significantly escalate energy demands.

The interconnection between energy and water is profound, as highlighted by the International Energy Agency (IEA). According to the World Energy Outlook (WEO), the water sector, which includes wastewater collection and treatment, is responsible for 4% of global electricity consumption. Biological wastewater treatment, which involves supplying air to the wastewater, consumes about a quarter of this electricity and is estimated to contribute 3% to total greenhouse gas emissions. aeration control

The activated sludge process is the dominant biological wastewater treatment technique, employing suspended growth microorganisms to decompose organic matter and eliminate contaminants. This process comprises aeration basins, clarifiers, and a return sludge system, with wastewater undergoing aeration in basins where a continuous air supply nurtures microorganism growth. It entails a series of vital biological reactions, including the removal of carbonaceous biochemical oxygen demand (CBOD₅), nitrification, denitrification, and phosphorus removal. Aerobic microorganisms oxidize organic matter to remove CBOD₅, requiring a substantial oxygen supply in the aeration basin. Nitrification converts ammonia (NH₃) to nitrate (NO₃⁻), preventing oxygen depletion and aquatic life toxicity in the receiving water.

Following the separation of microorganisms from water in the clarifier, clarified water is discharged after disinfection, while a concentrated mixture of microorganisms and wastewater solids, known as mixed liquor, is recycled to aeration basins and partially wasted. Quantifying the microorganisms in the mixed liquor is contingent on the concentration of mixed liquor suspended solids (MLSS), a crucial process parameter.

Ensuring adequate airflow to aeration basins is essential for effective wastewater treatment. Insufficient air supply can lead to sludge settling, requiring a minimum airflow rate to keep mixed liquor solids in suspension. Conversely, excessive air supply wastes energy and can encourage undesirable microbial growth, causing sludge separation problems. Due to airflow rates below requirements, low DO levels in the aeration basin can cause sludge bulking, causing poor solids separation in the secondary clarifier and the potential to violate regulatory total suspended solids (TSS) limits. Therefore, proper air supply to aeration basins is critical for wastewater treatment.

Conventional approaches to aeration control primarily focus on managing organic matter (substrate) and nutrients such as nitrogen and phosphorus, deploying energy-efficient diffusers, installing appropriately sized blowers, and implementing a feedback control algorithm to maintain a static DO setpoint. Notably, wastewater treatment plants often establish a conservative DO level, such as 2 mg/L, to cater to wastewater treatment under challenging conditions characterized by high organic, nutrient, and hydraulic loads, especially in municipal wastewater scenarios. Industrial wastewater with elevated organic and nitrogen loadings may necessitate a DO level greater than 2 mg/L for effective treatment.

The Water Environment Federation (WEF), a non-profit technical and educational organization representing water quality professionals worldwide, published a Manual of Practices (MOP) titled "Energy in Water Resource Recovery Facilities" in 2021. "Chapter 7: Aeration Systems" highlights that the prevailing belief, often reflected in state design guidelines, is that complete nitrification requires DO levels of at least 1.5 to 2 mg/L or higher, but there are instances of facilities consistently achieving complete nitrification and nearly complete denitrification throughout the year, even in cold conditions, with DO concentrations never exceeding 0.3 to 0.5 mg/L. This discrepancy stems from practical challenges in monitoring and forecasting organic and nitrogen (specifically ammonia and ammonium ion, NH₄⁺) strength in real time, leading to excessive air supply throughout the year to prevent potential effluent permit violations.

### Summary of the Invention

The techniques of this disclosure tackle the significant challenge of reducing energy consumption in wastewater treatment plants, mainly focusing on the aeration process. Aeration is crucial for pollutant degradation, yet conservative static dissolved oxygen (DO) control systems often result in inefficiencies, contributing to high energy costs. Globally, aeration constitutes 40~70% of total energy consumption in wastewater treatment.

In one example, the disclosure pertains to a technique for enhancing aeration in wastewater treatment. The process involves the reception of data for a wastewater treatment plant by one or more processors. This data describes water quality and operational details over a specified period, such as on a daily and/or real-time basis. Additionally, the method encompasses the creation of a predictive model for future water quality based on the received data, as well as the development of a conversion algorithm representing real-time water quality variations. Furthermore, the method includes determining multiple real-time DO setpoints and airflow rates for the wastewater treatment plant by one or more processors. This determination is based on the predictive model and conversion algorithm. Finally, the processors control the aeration system for the wastewater treatment plant, utilizing the established real-time DO setpoints and airflow rates.

In one example, the disclosure is directed to a method for optimizing aeration in wastewater treatment, the method comprising receiving, by one or more processors, data for a wastewater treatment plant, the data being descriptive of water quality over a period of time. The method further includes developing, by the one or more processors, a predictive model for future water quality based on the received data. The method also includes determining, by the one or more processors and based on the predictive model, a plurality of DO setpoints and airflow rates for the wastewater treatment plant. The method further includes controlling, by the one or more processors, an aeration system for the wastewater treatment plant using the plurality of DO setpoints and the airflow rates.

In another example, the disclosure is directed to a system comprising an aeration system for a wastewater treatment plant and one or more processors. The one or more processors are configured to receive data for the wastewater treatment plant, the data being descriptive of water quality over a period of time. The one or more processors are further configured to develop a predictive model for future water quality based on the received data. The one or more processors are also configured to determine, based on the predictive model, a plurality of DO setpoints and airflow rates for the wastewater treatment plant. The one or more processors are further configured to control the aeration system for the wastewater treatment plant using the plurality of DO setpoints and airflow rates.

In another example, the disclosure is directed to a non-transitory computer-readable storage medium containing instructions. The instructions, when executed, cause one or more processors to receive data for a wastewater treatment plant, the data being descriptive of water quality over a period of time. The instructions, when executed, further cause one or more processors to develop a predictive model for future water quality based on the received data. The instructions, when executed, also cause one or more processors to determine, based on the predictive model, a plurality of DO setpoints and airflow rates for the wastewater treatment plant. The instructions, when executed, further cause one or more processors to control an aeration system for the wastewater treatment plant using the plurality of DO setpoints and airflow rates.

The techniques of this disclosure introduce an aeration control strategy to address these challenges. Leveraging AI-predicted water quality and operational parameters periodically, such as on a daily, hourly, or minute-by-minute basis, the techniques of this disclosure may employ machine learning techniques, including deep learning, gradient boosting (GB), and pattern recognition tools like feature analysis and an empirical calibration algorithm to determine optimal DO setpoints for proper airflow rates dynamically. This eliminates the need for static DO setpoints, enabling real-time adjustments to optimize aeration efficiency and save energy.

The techniques of this disclosure may also leverage an AI-driven system that may identify sensor fouling, bypass the DO-based feedback system as needed, and calculate the required airflow rates autonomously, ensuring operational stability and enabling additional energy savings. Employing advanced machine learning and pattern recognition techniques, the system may continuously evaluate (e.g., in real time or in routine intervals) the responses of airflow rates to DO setpoints under prevailing operational conditions. This feedback loop enables the system to identify and correct prediction errors or a sudden change in the influent organic and nitrogen loading, ensuring stability and optimal aeration efficiency.

The techniques of this disclosure may employ a correction algorithm based on measured effluent water quality and operational data as feedback to adjust DO setpoints in response to wastewater treatment performance. The overall correction factor is typically computed by assigning unique negative weights to total phosphorus, nitrate, nitrite, and positive weights to other water quality and operational parameters. This may lead to the autonomous determination of the best DO setpoints for a wastewater treatment plant over time.

While real-time sensors for ammonia, nitrate, and other parameters are available for aeration control, the industry predominantly chooses DO sensors due to maintenance challenges. In contrast, the techniques of this disclosure may operate without ammonia and nitrate sensors, while, in some examples, the techniques of this disclosure may incorporate the readings from ammonia and nitrate sensors if accessible, providing real-time adaptability in aeration control.

The techniques of this disclosure may allow for zone-specific and aeration basin-specific control, optimizing aeration rates for diverse treatment zones within each basin. This flexibility caters to varying-sized wastewater treatment plants, emphasizing overall aeration process optimization.

Additionally, the techniques of this disclosure may identify potential operational and effluent permit violation issues from AI-predicted operational and effluent water quality parameters using Explainable AI (XAI) with SHAP (Shapley Additive Explanations) and other interpretive/diagnostic tools. This feature empowers operators to take corrective measures in advance, enhancing overall operational efficiency.

The versatility of the methods presented in this disclosure could be applicable to the Anammox system, a sustainable approach for eliminating nitrogen compounds that notably reduces aeration energy. However, the Anammox system faces inherent instability arising from the necessity for a delicate balance between aerobic and anoxic conditions. The techniques outlined here have the capability to dynamically adjust the DO setpoint within a narrower range to accommodate varying influent water quality. This facilitates the growth of Anammox bacteria while maintaining appropriate DO levels for other microorganisms engaged in organic removal.

The techniques described herein may lead to a paradigm shift in aeration control strategies for wastewater treatment plants. Driven by advancements in accelerated computational speeds and AI models, the integration of AI, statistical tools, and sophisticated control algorithms ensures efficient oxygen supply and optimized treatment performance. As machine learning tools progress, the methods outlined herein can evolve, establishing the aeration control approach as a steadfast solution for forthcoming wastewater treatment practices. These techniques may pave the way for a more sustainable and efficient treatment system, effectively addressing the evolving demands of wastewater management.

Advanced real-time aeration control methods, primarily based on deterministic models rooted in biological kinetics and sensors, are not accurate enough to address the shortcomings of traditional approaches. Consequently, the widely adopted method relies on DO sensors with a static DO level feedback-based control to maintain a sufficient oxygen supply. Therefore, pursuing a more efficient and sustainable real-time aeration control system continues, aiming to reduce dependence on high-maintenance sensors and facilitate dynamic adjustments of DO setpoints based on organic and nitrogen loading strength. Real-time influent organic loading prediction would facilitate the modulation of DO levels in the aeration basin, maintaining them at an optimal concentration for the prevailing organic, nutrient, and hydraulic loading conditions. This breakthrough would significantly enhance energy efficiency and reduce operational costs.

In summary, conventional aeration control methods in wastewater treatment plants relying on static DO setpoints cause unnecessary aeration and energy consumption. This invention presents an innovative aeration control approach utilizing AI tools with the potential for continuously evolving empirical algorithms. It dynamically determines real-time DO setpoint and airflow requirements, continuously optimizing DO setpoints through feedback based on ongoing water quality data using a unique, constantly updated correction algorithm. This pioneering method eliminates the reliance on static DO setpoints, resulting in substantial energy savings and enhanced treatment efficiency.

The details of one or more examples of the disclosure are set forth in the accompanying drawings and the description below. Other features, objects, and advantages of the disclosure will be apparent from the description, drawings, and the claims.

### Brief Description of the Drawings

The following drawings are illustrative of particular examples of the present disclosure and, therefore, do not limit the scope of the invention. The drawings are not necessarily to scale, though examples can include the scale illustrated and are intended for use in conjunction with the explanations in the following detailed description wherein like reference characters denote like elements. Examples of the present disclosure will hereinafter be described in conjunction with the appended drawings.
FIG. 1 is a flowchart of an AI-driven real-time aeration optimization algorithm for energy savings.
FIG. 2 is a block diagram illustrating a more detailed example of a computing device configured to perform the techniques described herein.
FIG. 3 is a relationship between DO and substrate utilization rates (organic matter removed per mass of biomass in the aeration basin per day), showing the safe DO zone where no noticeable solids separation issue would occur.
FIG. 4 is a flowchart of a method of controlling aeration at a single zone in an aeration basin at a wastewater treatment plant.
FIG. 5 is a flowchart of a method of controlling aeration at three different zones in an aeration basin at a wastewater treatment plant.
FIG. 6 is a flowchart describing a method for optimizing aeration in wastewater treatment plants, in accordance with the techniques of this disclosure.

### Detailed Description

The following detailed description is exemplary in nature and is not intended to limit the scope, applicability, or configuration of the techniques or systems described herein in any way. Rather, the following description provides some practical illustrations for implementing examples of the techniques or systems described herein. Those skilled in the art will recognize that many of the noted examples have a variety of suitable alternatives.

In some examples of the techniques described herein, a wastewater treatment system may utilize a method of using AI-driven predictive tools based on data accumulated over an extended period, ranging from a year to more, to determine optimal DO setpoints and airflow rates. This approach does not depend on real-time sensors beyond those monitoring DO to regulate aeration in biological wastewater treatment.

Some examples of the techniques described herein may relate to a method of pretreating data collected at a wastewater treatment plant using machine learning and statistical tools for handling missing values, normalization, visualization, and a better understanding of the operation and performance to obtain the best predictive models and identify patterns for DO setpoint and airflow rate determination in real time. Data concerning influent water flow rates, as well as influent and effluent water quality parameters mandated by regulatory agencies-including biochemical oxygen demand (BOD₅), ammonia, total nitrogen, total phosphorus, pH, temperature, and operational parameters-are routinely gathered by wastewater treatment plants on a daily basis. The extensive dataset accumulated over numerous years undergoes preprocessing to address missing values and identify outliers.

Some examples of the techniques described herein may include a method for creating site-specific AI-driven predictive models using pretreated dataset. These models are trained for water quality and operational parameters required to compute real-time DO setpoints. The dataset undergoes training to identify the most effective AI model from options including autoregressive integrated moving average (ARIMA), seasonal ARIMA (SARIMA), seasonal-trend decomposition using LOESS (STL), long short-term memory (LSTM), random forests for time series (RFTS), XGBoost, CatBoost, and other emerging tools, Subsequently, the AI-predicted daily values for parameters such as CBOD₅, TKN, TSS, TP, MLSS, sludge age, and other pertinent factors at a wastewater treatment plant are employed to compute real-time DO setpoints.

Some examples of the techniques described herein may concern computing real-time DO setpoints and airflow rates considering daily predicted influent water quality and operational values. An additional dataset, comprising influent flow rates, DO readings, airflow rates, energy consumption rates, and other pertinent data at minute intervals, is employed to recognize diurnal, weekly, and seasonal variations. This recognition is achieved through the utilization of pattern recognition machine learning tools, statistical methods, and empirical relations. The machine learning tools encompass libraries such as Scikit-learn, TensorFlow, and other relevant Python-based tools. An algorithm is formulated using the results derived from these machine learning tools and the AI-predicted daily water quality data. This algorithm is designed to calculate the real-time DO setpoint tailored to the specific requirements of a wastewater treatment plant. To prevent sudden operational shifts, the algorithm is set to initiate at a cautious level and is consistently fine-tuned through ongoing performance evaluations. This algorithm facilitates the determination of optimal DO setpoints at specified intervals, whether on a minute-by-minute basis or other predefined periods. Its goal is to achieve the optimal balance between treatment efficiency and energy conservation over time.

Some examples of the techniques described herein may involve the identification of anomalies associated with malfunctioning DO sensors and abnormally high airflow rates. This entails ongoing analysis of DO sensor readings and airflow rates through the machine learning tool developed for the real-time DO setpoint computation algorithm. Upon detecting an anomaly, corrective measures are implemented for airflow rates. Corrections are made based on predetermined maximum airflow rates and the airflow rates observed in other aeration zones and basins. The adjusted airflow rates are then transmitted to the blower control system, facilitating the necessary adjustments. In cases where a faulty DO sensor is identified, the airflow rate is rectified until the pattern recognition machine learning model detects that the DO sensor is either cleaned or repaired for each specific zone, basin, and wastewater treatment plant. These corrected values undergo continuous reevaluation to optimize energy savings to the maximum extent possible.

Some examples of the techniques described herein may relate to rectifying forecasted influent concentration disparities by employing pattern recognition techniques that analyze airflow rates and DO readings at a wastewater treatment plant, considering prevailing influent and operational conditions. This is initially achieved through a series of the following tests. The aeration process is controlled by increasing and decreasing the airflow rate and DO setpoint in three different fractions, at low, average, and high organic loading levels, while monitoring the corresponding DO readings and airflow rates. To identify the most suitable pattern recognition machine learning tool, widely available tools such as open-source machine learning libraries and statistical packages may be used to train specific patterns for a particular wastewater treatment plant. Subsequently, DO setpoints can be dynamically adjusted in response to the discrepancy between the predicted and actual wastewater water quality. This same approach is also applied for modifying DO setpoints when shock loading, resulting from the sudden discharge of high-strength wastewater, is detected. Continuous training of patterns for DO and airflow rate profiles will enhance the accuracy of DO setpoint corrections.

Some examples of the techniques described herein may relate to using AI-predicted airflow rates in addition to or instead of computed DO setpoints to control airflow directly at a wastewater treatment plant if sufficient data is available. AI-predicted airflow rates can be adjusted for unexpected organic and nitrogen loadings using the same machine learning tools and a predetermined algorithm developed for the DO setpoint aeration control system.

Some examples of the techniques described herein may revolve around aeration control using AI-predicted airflow rates instead of the traditional DO-based feedback aeration control system. This shift reduces dependency on DO sensors, which require regular maintenance, once sufficient data has been accumulated and validated in conjunction with the DO-based feedback aeration control system.

Some examples of the techniques described herein may pertain to a feedback system that autonomously attains precise DO setpoints tailored to a wastewater treatment plant using the latest dataset. This is accomplished by evaluating measured effluent water quality parameters, enabling optimal operating conditions and maximizing energy savings. The system evaluates various operational and effluent water quality parameters, such as CBOD₅, total nitrogen, ammonia, ammonium ion, nitrate, nitrite, total phosphorus, total suspended solids, MLSS, mixed liquor volatile suspended solids (MLVSS), and SVI, against target values or moving averages to derive an overall correction factor. The correction factor is derived from operational and effluent water quality parameters, each assigned a distinctive weighting factor. Total phosphorus, nitrate, and nitrite concentrations typically bear negative weights, while other water quality parameters carry positive weights. This correction factor is then applied to adjust the DO setpoints for the following day. An empirical algorithm for feedback is explicitly established for each wastewater treatment plant due to variations in performance, operational target values, and effluent permits. This iterative process ensures the determination of optimal DO setpoints customized for each wastewater treatment plant.

Some examples of the techniques described herein may relate to harnessing the predictive power of AI models and the diagnostic potential of AI diagnostic tools, including Explainable AI (XAI) with Shapley Additive exPlanations (SHAP), Local Interpretable Model-agnostic Explanations (LIME), Scikit-learn's Model Inspection Tools, and other interpretive and diagnostic tools. These diagnostic tools will allow for identifying potential operational issues and their underlying causes proactively, enabling timely corrective actions to prevent potential operational disruptions and effluent permit violations.

The techniques of this disclosure may be applied to other specialty systems within wastewater treatment facilities, including Anammox systems. In addition to typical sludge-cleaning systems in wastewater treatment facilities, Anammox systems use anaerobic ammonium oxidation to remove nitrogen from the wastewater. More specifically, Anammox systems introduce bacteria into the wastewater that convert ammonia and nitrite into dinitrogen gas. Utilizing the methods outlined in this disclosure for Anammox systems involves the computing devices described herein managing aeration systems. This may be achieved through real-time adjustments of DO setpoints and airflow rates to balance the narrow borderline of aerobic and anoxic conditions delicately. This may ensure the stable operation of both side-stream and main-stream basins within the Anammox system, adapting to variations in influent water quality. The aeration control in this context mirrors how the techniques function in traditional activated sludge processes.

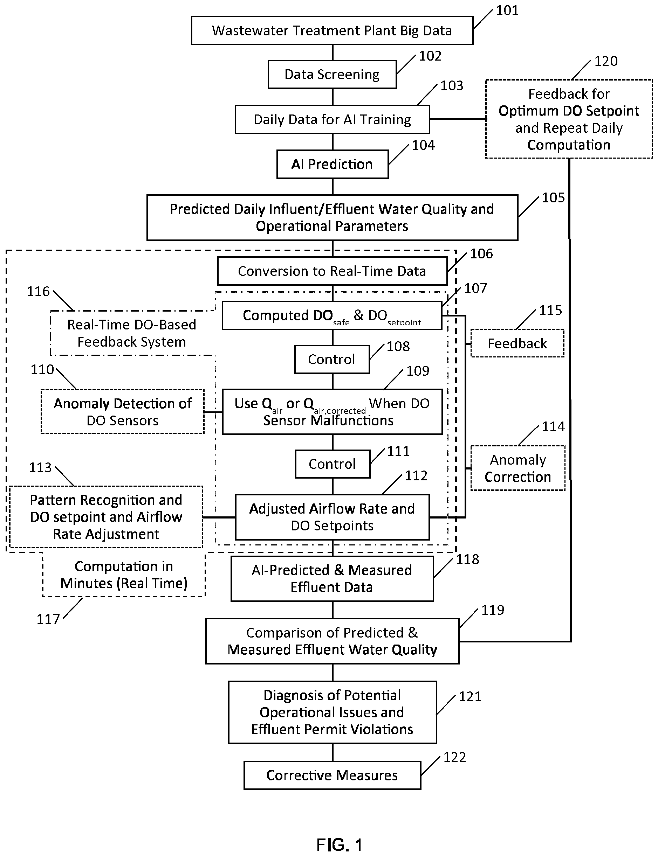

FIG. 1 is a block diagram illustrating an aeration control system utilizing AI-driven algorithms. The substantial dataset, comprising influent and effluent water quality data mandated by regulatory agencies and operational data (101) over an extended period ranging from one to over ten years, is systematically preprocessed and screened (102). This screening involves addressing missing values, normalization, and anomalies through techniques such as imputation, deletion or exclusion, interpolation, outlier detection and handling, machine learning models, and domain-specific methods. The resulting preprocessed dataset (103) undergoes training to identify the most effective AI model from options including autoregressive integrated moving average (ARIMA), seasonal ARIMA (SARIMA), seasonal-trend decomposition using LOESS (STL), long short-term memory (LSTM), random forests for time series (RFTS), XGBoost, CatBoost, and other emerging tools (104). Subsequently, the AI-predicted daily values for parameters such as CBOD₅, TKN, TSS, TP, MLSS, sludge age, and other pertinent factors at a wastewater treatment plant (105) are employed to ascertain real-time DO setpoints.

The next step entails generating real-time DO setpoints by leveraging diurnal, weekly, and seasonal patterns identified through pattern recognition using machine learning tools and the daily AI-predicted parameters. The procedural algorithm for generating real-time DO setpoints encompasses identifying the most effective pattern recognition method for a wastewater treatment plant, employing machine learning libraries in Python such as Scikit-learn, TensorFlow, and other relevant tools (106). Subsequently, the daily AI-predicted parameters are empirically integrated into the pattern recognition tool to dynamically generate the optimal DO setpoint in real time (107).

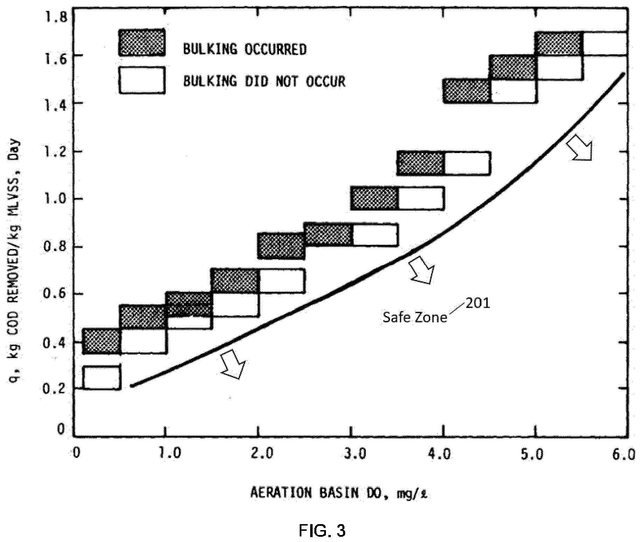

FIG. 3 is the illustration of the safe zone for DO levels at varying influent organic loadings. The safe DO level that prevents any potential solids separation caused by sludge bulking and other operational issues may be determined. The influent flow rate measured in minutes or other time intervals, the predicted effluent and influent CBOD₅, TN, and TP, MLSS, and the aeration volume are used to compute the substrate utilization rate (y-axis in FIG. 3) and determine whether the real-time computed DO setpoint is within the safe DO zone shown in FIG. 3 (201). If the computed DO setpoint is outside the safe DO zone, a safe DO setpoint (DO_{safe} in 107) is computed using the curve (202). The curve will be continuously updated as more data is collected over time. The computed DO setpoint is transferred to a DO-based feedback aeration control system (108).

The regulation of the airflow rate is contingent on a specified dissolved oxygen (DO) setpoint (109). In instances where DO sensors encounter fouling or malfunction, there is an escalation in the airflow rate. A proficient pattern recognition system, having undergone training, identifies anomalies in DO sensors and calculates the appropriate airflow rate. This calculation takes into account the performance of other aeration zones and basins, alongside the predetermined maximum airflow rate assigned to each zone and basin (110). Subsequently, when a DO sensor malfunctions or is fouled, the rectified airflow rate is transmitted to the blower control system (111).

In instances where the AI-predicted values exhibit unacceptable disparities, the DO setpoint may not be correct, causing atypical airflow patterns. Leveraging the trained pattern recognition designed for identifying DO sensor malfunctions (112 and 113), adjustments can be implemented to ensure the appropriate DO setpoint aligns with the incoming wastewater quality (114) through a feedback system (115). This modification enhances the DO-based feedback aeration control system within a wastewater treatment plant, enabling real-time aeration control (116). In step 117, the transformation of daily predicted parameters into a real-time DO control, incorporating anomaly detection and recognition of water quality changes, is executed seamlessly as a cohesive process.

The efficacy of aeration basins under the real-time dissolved oxygen (DO)-based feedback control system can be consistently assessed by juxtaposing the daily measured water quality values with the AI-predicted effluent water quality values. Employing the correction factor previously determined, this factor is incorporated into the daily updated data (103) to enhance AI prediction (104), fostering an ongoing convergence of optimal DO setpoints tailored to the specific needs of a wastewater treatment plant over time.

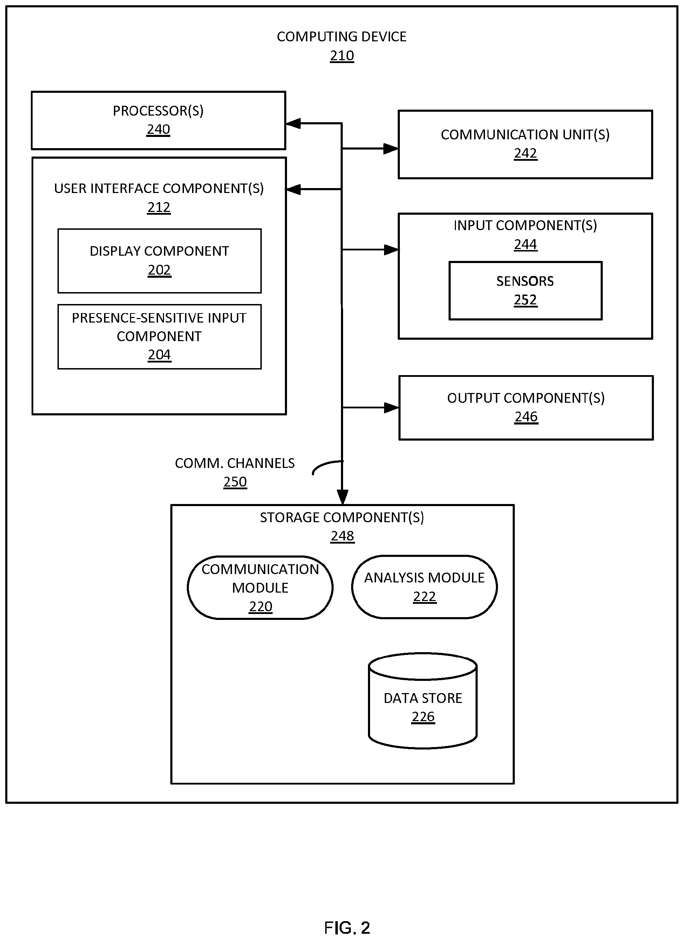

FIG. 2 is a block diagram illustrating a more detailed example of a computing device configured to perform the techniques described herein. Computing device 210 of FIG. 2 is described below as an example of computing device 110 of FIG. 1. FIG. 2 illustrates only one particular example of computing device 210, and many other examples of computing device 210 may be used in other instances and may include a subset of the components included in example computing device 210 or may include additional components not shown in FIG. 2.

Computing device 210 may be any computer with the processing power required to adequately execute the techniques described herein. For instance, computing device 210 may be any one or more of a mobile computing device (e.g., a smartphone, a tablet computer, a laptop computer, etc.), a desktop computer, a proportional integral-derivative (PID) controller, a smarthome component (e.g., a computerized appliance, a home security system, a control panel for home components, a lighting system, a smart power outlet, etc.), a vehicle, a wearable computing device (e.g., a smart watch, computerized glasses, a heart monitor, a glucose monitor, smart headphones, etc.), a virtual reality/augmented reality/extended reality (VR/AR/XR) system, a video game or streaming system, a network modem, router, or server system, or any other computerized device that may be configured to perform the techniques described herein.

In some instances, computing device 210 may be a distributed computing system consisting of a number of different computing devices. For instance, computing device 210 may consist of or be a part of a supervisory control and data acquisition (SCADA) system designed to monitor, control, and analyze devices and processes in an industrial plant, such as a wastewater treatment plant. In such instances, the techniques performed by modules 220 and 222 may be distributed throughout the system, with any number of devices performing any number of the portions of the techniques described herein, controlling devices and reading and writing data within the SCADA system.

As shown in the example of FIG. 2, computing device 210 includes user interface components (UIC) 212, one or more processors 240, one or more communication units 242, one or more input components 244, one or more output components 246, and one or more storage components 248. UIC 212 includes display component 203 and presence-sensitive input component 204. Storage components 248 of computing device 210 include communication module 220, analysis module 222, and data store 226.

One or more processors 240 may implement functionality and/or execute instructions associated with computing device 210 to optimize an aeration system in a wastewater treatment plant. That is, processors 240 may implement functionality and/or execute instructions associated with computing device 210 to perform calculations using wastewater quality data and control an aeration system based on those calculations.

Examples of processors 240 include any combination of application processors, display controllers, auxiliary processors, one or more sensor hubs, and any other hardware configured to function as a processor, a processing unit, or a processing device, including dedicated graphical processing units (GPUs), or cloud computing services. Modules 220 and 222 may be operable by processors 240 to perform various actions, operations, or functions of computing device 210. For example, processors 240 of computing device 210 may retrieve and execute instructions stored by storage components 248 that cause processors 240 to perform the operations described with respect to modules 220 and 222. The instructions, when executed by processors 240, may cause computing device 210 to optimize an aeration system in a wastewater treatment plant.

Communication module 220 may execute locally (e.g., at processors 240) to control and receive various data points from various sensors and outputs control signals to aeration systems. In some examples, communication module 220 may act as an interface to a remote service accessible to computing device 210. For example, communication module 220 may be an interface or application programming interface (API) to a remote server that controls the sensors, receives the data from the sensors, and controls the aeration system.

In some examples, analysis module 222 may execute locally (e.g., at processors 240) to provide functions associated with developing artificial intelligence models and analyzing the data received by communication module 220. In some examples, analysis module 222 may act as an interface to a remote service accessible to computing device 210. For example, analysis module 222 may be an interface or application programming interface (API) to a remote server that develops the artificial intelligence models and analyzes the data received by communication module 220.

One or more storage components 248 within computing device 210 may store information for processing during operation of computing device 210 (e.g., computing device 210 may store data accessed by modules 220 and 222 during execution at computing device 210). In some examples, storage component 248 is a temporary memory, meaning that a primary purpose of storage component 248 is not long-term storage. Storage components 248 on computing device 210 may be configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art.

Storage components 248, in some examples, also include one or more computer-readable storage media. Storage components 248 in some examples include one or more non-transitory computer-readable storage mediums. Storage components 248 may be configured to store larger amounts of information than typically stored by volatile memory. Storage components 248 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage components 248 may store program instructions and/or information (e.g., data) associated with modules 220 and 222 and data store 226. Storage components 248 may include a memory configured to store data or other information associated with modules 220 and 222 and data store 226.

Communication channels 250 may interconnect each of the components 212, 240, 242, 244, 246, and 248 for inter-component communications (physically, communicatively, and/or operatively). In some examples, communication channels 250 may include a system bus, a network connection, an inter-process communication data structure, or any other method for communicating data.

One or more communication units 242 of computing device 210 may communicate with external devices via one or more wired and/or wireless networks by transmitting and/or receiving network signals on one or more networks. Examples of communication units 242 include a network interface card (e.g., such as an Ethernet card), an optical transceiver, a radio frequency transceiver, a GPS receiver, a radio-frequency identification (RFID) transceiver, a near-field communication (NFC) transceiver, or any other type of device that can send and/or receive information. Other examples of communication units 242 may include short wave radios, cellular data radios, wireless network radios, as well as universal serial bus (USB) controllers.

One or more input components 244 of computing device 210 may receive input. Examples of input are tactile, audio, and video input. Input components 244 of computing device 210, in one example, include a presence-sensitive input device (e.g., a touch sensitive screen, a PSD), mouse, keyboard, voice responsive system, camera, microphone or any other type of device for detecting input from a human or machine. In some examples, input components 244 may include one or more sensor components (e.g., sensors 252). Sensors 252 may include one or more biometric sensors (e.g., fingerprint sensors, retina scanners, vocal input sensors/microphones, facial recognition sensors, cameras), one or more location sensors (e.g., GPS components, Wi-Fi components, cellular components), one or more temperature sensors, one or more movement sensors (e.g., accelerometers, gyros), one or more pressure sensors (e.g., barometer), one or more ambient light sensors, and one or more other sensors (e.g., infrared proximity sensor, hygrometer sensor, and the like). Other sensors, to name a few other nonlimiting examples, may include a radar sensor, a lidar sensor, a sonar sensor, a heart rate sensor, magnetometer, glucose sensor, olfactory sensor, compass sensor, or a step counter sensor.

One or more output components 246 of computing device 210 may generate output in a selected modality. Examples of modalities may include a tactile notification, audible notification, visual notification, machine generated voice notification, or other modalities. Output components 246 of computing device 210, in one example, include a presence-sensitive display, a sound card, a video graphics adapter card, a speaker, a cathode ray tube (CRT) monitor, a liquid crystal display (LCD), a light emitting diode (LED) display, an organic LED (OLED) display, a virtual/augmented/extended reality (VR/AR/XR) system, a three-dimensional display, or any other type of device for generating output to a human or machine in a selected modality.

UIC 212 of computing device 210 may include display component 202 and presence-sensitive input component 204. Display component 202 may be a screen, such as any of the displays or systems described with respect to output components 246, at which information (e.g., a visual indication) is displayed by UIC 212 while presence-sensitive input component 204 may detect an object at and/or near display component 202.

While illustrated as an internal component of computing device 210, UIC 212 may also represent an external component that shares a data path with computing device 210 for transmitting and/or receiving input and output. For instance, in one example, UIC 212 represents a built-in component of computing device 210 located within and physically connected to the external packaging of computing device 210 (e.g., a screen on a mobile phone). In another example, UIC 212 represents an external component of computing device 210 located outside and physically separated from the packaging or housing of computing device 210 (e.g., a monitor, a projector, etc. that shares a wired and/or wireless data path with computing device 210).

UIC 212 of computing device 210 may detect two-dimensional and/or three-dimensional gestures as input from a user of computing device 210. For instance, a sensor of UIC 212 may detect a user's movement (e.g., moving a hand, an arm, a pen, a stylus, a tactile object, etc.) within a threshold distance of the sensor of UIC 212. UIC 212 may determine a two or three-dimensional vector representation of the movement and correlate the vector representation to a gesture input (e.g., a hand-wave, a pinch, a clap, a pen stroke, etc.) that has multiple dimensions. In other words, UIC 212 can detect a multi-dimension gesture without requiring the user to gesture at or near a screen or surface at which UIC 212 outputs information for display. Instead, UIC 212 can detect a multi-dimensional gesture performed at or near a sensor which may or may not be located near the screen or surface at which UIC 212 outputs information for display.

In accordance with the techniques of this disclosure, communication module 220 may receive data for a wastewater treatment plant, the data being descriptive of water quality over a period of time. In some instances, the data for the wastewater treatment plant may include data related to any one or more of influent water quality, operational parameters, and effluent water quality. In instances where the data includes effluent water quality parameters, analysis module 222 may predict the effluent water quality parameters for performance diagnosis utilizing artificial intelligence. Computing device 210 may ultimately control the aeration system by implementing corrective measures to prevent potential operational issues and effluent permit violations.

Analysis module 222 may develop a predictive model for future water quality based on the received data. In some instances, in developing the predictive model, analysis module 222 may normalize the data and utilize the normalized data to associate influent and/or effluent water quality parameters with real-time DO setpoints and airflow rates. Analysis module 222 may develop, using pattern recognition machine learning techniques, an algorithm that allows for converting the real-time water quality parameters with particular DO setpoints and particular airflow rates for integration into the aeration system.

Analysis module 222 may determine, based on the predictive model, a plurality of DO setpoints and airflow rates for the wastewater treatment plant. In some instances, in determining the plurality of DO setpoints, analysis module 222 may compute the plurality of DO setpoints for various organic and/or nitrogen loadings using an evolving empirical algorithm.

Communication module 220 may control an aeration system for the wastewater treatment plant using the plurality of DO setpoints and the airflow rates. In some instances, in controlling the aeration system, communication module 220 may adjust an airflow rate in the aeration system directly. In some instances, in controlling the aeration system, communication module 220 may tune the aeration system for optimized energy savings. In some instances, in controlling the aeration system, communication module 220 may adjust the DO setpoint and the airflow rate in real time in response to fluctuations in influent water quality. In some instances, in controlling the aeration system, communication module 220 may control multiple aeration basins and zones, each having different real-time DO and airflow rate setpoints, in response to uneven influent distribution and degree of diffuser fouling or aeration efficiency. In some instances, in controlling the aeration system, communication module 220 may control non-diffuser bubble aeration systems, including one or more of brush rotors, mechanical mixers, and jet aerators.

In some instances, analysis module 222 may detect, using one or more sensors, one or more current data points descriptive of a real-time water quality for the wastewater treatment plant. In some such instances, analysis module 222 may determine an anomaly in the one or more data points. Communication module 220 may then perform a secondary action based on the anomaly. For instance, analysis module 222 may adjust one or more of the plurality of DO setpoints and the airflow rates and communication module 222 may control the aeration system based on the adjusted plurality of DO setpoints and the adjusted airflow rates. In other instances, communication module 220 may output, to an output device (such as a computer or a smartphone), an indication of a malfunctioning sensor of the one or more sensors or an indication of a water quality change.

In some instances, analysis module 222 may update the predictive model based on the one or more current data points. Analysis module 222 may recalculate the plurality of DO setpoints and the airflow rates based on the updated predictive model. Communication module 220 may control the aeration system for the wastewater treatment plant using the recalculated plurality of DO setpoints and the recalculated airflow rates.

Some examples of the techniques described herein may incorporate diagnostic features derived from the daily collection of water quality and operational data, utilizing AI diagnostic tools, including Explainable AI (XAI) with Shapley Additive exPlanations (SHAP), Local Interpretable Model-agnostic Explanations (LIME), Scikit-learn's Model Inspection Tools, and other similar approaches. The crucial parameters influencing SVI include organic loading, BOD₅, and influent flow rate. Elevated organic loading and flow rate contribute to a decrease in the SVI value, while TP, TSS, NH₃-N, TKN, and BOD₅ lead to an increase in the SVI value. The explainable function serves to identify input parameters affecting each predicted SVI value. This explicative and diagnostic capability empowers operators to proactively take timely corrective actions (121), averting operational disruptions and effluent permit violations (122).

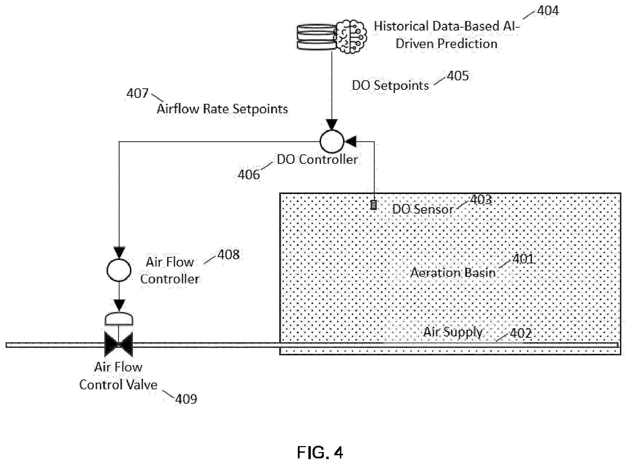

Some examples of the techniques described herein may relate to the single control of DO and airflow rate setpoints (FIG. 4), where the aeration control system is used in an aeration basin (401) by an air supply system (402) for a single DO sensor (403) using DO and airflow rate setpoints (405 and 407) generated by the AI-driven prediction algorithm (404), in which the DO controller (406) and the airflow controller (408 and 409) are regulated.

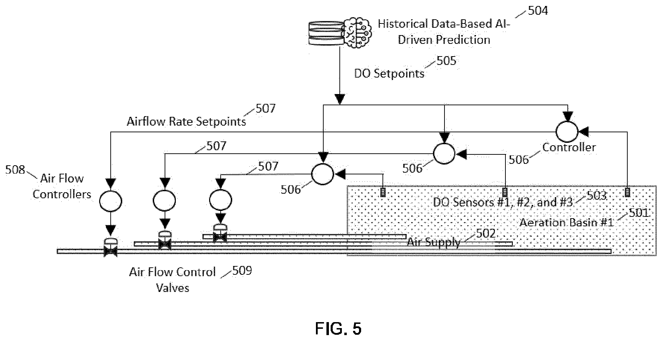

Some examples of the techniques described herein may relate to the multiple control of DO and airflow rate setpoints (FIG. 5), where an aeration basin (501) has three air supply zones (502) and DO sensors (503), each controlled in the same way (504 to 509) as described in FIG. 4. This approach is beneficial when the distribution of primary sedimentation basin effluents and the degree of diffuser fouling vary across the basins. By independently controlling each air supply zone, the system can effectively address these variations and ensure optimal aeration conditions throughout the basin, maximizing energy savings.

Some examples of the techniques described herein may relate to the locations of feeding DO setpoints and airflow rates generated in 108 and 111/112 in FIG. 1 sent to a DO-based feedback aeration control system (405 and 407 in FIG. 4 and 505 and 507 in FIG. 5).

Some examples of the techniques described herein may relate to the aeration control method based on DO feedback, where machine learning tools such as radial basis function neural networks are used for more robust control of 406 and 408 in FIG. 4 and 506 and 508 in FIG. 5.

Some examples of the techniques described herein may relate to the valuable feature of computing DO setpoints for proper airflow rates in real-time for multiple aeration basins individually while incorporating all the measures described above. This leads to further refinement of aeration control for greater energy savings.

Some examples of the techniques described herein may pertain to the application of the invention within the Anammox system to control DO setpoints for proper airflow rates in real time in response to fluctuations of influent water quality in side-stream and main-stream basins that receive air. This real-time control mechanism dynamically provides the proper DO level for an influent organic and ammonia loading predicted by the AI-driven algorithm, preventing excessively low or high DO concentrations and maintaining a preferred DO range. While the specific DO range may vary depending on the plant, a typical DO range could be between 0.2~0.5 mg/L, although other plants may utilize ranges with different ranges.

Some examples of the techniques described herein may relate to the AI-driven aeration control system for all aeration systems in the activated sludge wastewater treatment process, including fine and coarse bubble diffusers, brush rotors, or similar designs in oxidation ditches for aeration, mechanical mixers, jet aerators, and other aeration systems. For aeration systems other than bubble diffusers, the airflow rate is replaced with the speed of rotors, the horsepower of motors, or the power of pumps as a control since most activated sludge processes are controlled based on DO levels.

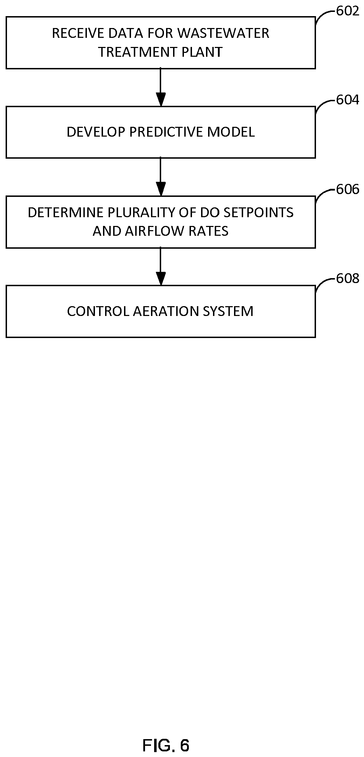

FIG. 6 is a flow chart illustrating an example mode of operation. The techniques of FIG. 6 may be performed by one or more processors of a computing device, such as system 100 of FIG. 1 and/or computing device 210 illustrated in FIG. 2. For purposes of illustration only, the techniques of FIG. 6 are described within the context of computing device 210 of FIG. 2, although computing devices having configurations different than that of computing device 210 may perform the techniques of FIG. 6.

In accordance with the techniques described herein, communication module 220 receives data for a wastewater treatment plant, the data being descriptive of water quality over a period of time (602). Analysis module 222 develops a predictive model for future water quality based on the received data (604). Analysis module 222 determines, based on the predictive model, a plurality of DO setpoints and airflow rates for the wastewater treatment plant (606). Communication module 220 controls an aeration system for the wastewater treatment plant using the plurality of DO setpoints and the airflow rates (608).

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples of the disclosure have been described. Any combination of the described systems, operations, or functions is contemplated. These and other examples are within the scope of the following claims.

## Claims

1. A method for optimizing aeration in wastewater treatment, the method comprising:
receiving, by one or more processors, data for a wastewater treatment plant, the data being descriptive of water quality over a period of time;
developing, by the one or more processors, a predictive model for future water quality based on the received data;
determining, by the one or more processors and based on the predictive model, a plurality of dissolved oxygen, DO,
setpoints and airflow rates for the wastewater treatment plant; and
controlling, by the one or more processors, an aeration system for the wastewater treatment plant using the plurality of DO setpoints and the airflow rates.

2. The method of claim 1, further comprising:
detecting, by the one or more processors, using one or more sensors, one or more current data points descriptive of a real-time water quality for the wastewater treatment plant.

3. The method of claim 2, further comprising:
determining, by the one or more processors, an anomaly in the one or more data points; and
performing, by the one or more processors, a secondary action based on the anomaly.

4. The method of claim 3, wherein the secondary action comprises one or more of:
adjusting, by the one or more processors, one or more of the plurality of DO setpoints and the airflow rates and controlling, by the one or more processors, the aeration system based on the adjusted plurality of DO setpoints and the adjusted airflow rates;
outputting, by the one or more processors and to an output device, an indication of a malfunctioning sensor of the one or more sensors; and
outputting, by the one or more processors and to the output device, an indication of a water quality change.

5. The method of any one of claims 2 to 4, further comprising:
updating, by the one or more processors, the predictive model based on the one or more current data points;
recalculating, by the one or more processors, the plurality of DO setpoints and airflow rates based on the updated predictive model; and
controlling, by the one or more processors, the aeration system for the wastewater treatment plant using the recalculated plurality of DO setpoints and the recalculated airflow rates.

6. The method of any one of the preceding claims, wherein developing the predictive model comprises:
normalizing, by the one or more processors, the data;
utilizing, by the one or more processors, the normalized data to associate influent and effluent water quality parameters and operation with real-time DO setpoints and airflow rates; and
developing, by the one or more processors and using pattern recognition machine learning techniques, an algorithm that allows for converting computed real-time water quality into particular DO setpoints and particular airflow rates for integration into the aeration system.

7. The method of any one of the preceding claims, wherein controlling the aeration system comprises adjusting, by the one or more processors, an airflow rate in the aeration system.

8. The method of any one of the preceding claims, wherein the data for the wastewater treatment plant comprises data related to one or more of influent water quality, operational parameters, and effluent water quality.

9. The method of claim 8, wherein the effluent water quality parameters are predicted for performance diagnosis utilizing artificial intelligence, and wherein controlling the aeration system comprises implementing corrective measures to prevent potential operational issues and effluent permit violations.

10. The method of any one of the preceding claims, wherein determining the plurality of DO setpoints comprises computing the plurality of DO setpoints for various organic and nitrogen loadings using an evolving empirical algorithm.

11. The method of any one of the preceding claims, wherein controlling the aeration system comprises one or more of:
tuning the aeration system for optimized energy savings over time;
controlling non-diffuser bubble aeration systems, including one or more of brush rotors, mechanical mixers, and jet aerators;
adjusting the DO setpoint and the airflow rate in real time in response to fluctuations in influent water quality; and
controlling multiple aeration basins and zones, each having different real-time DO and airflow rate setpoints, in response to uneven influent distribution and degree of diffuser fouling or aeration efficiency.

12. A system comprising:
an aeration system for a wastewater treatment plant; and
one or more processors configured to:
receive data for the wastewater treatment plant, the data being descriptive of water quality over a period of time;
develop a predictive model for future water quality based on the received data;
determine, based on the predictive model, a plurality of DO setpoints and airflow rates for the wastewater treatment plant; and
control the aeration system for the wastewater treatment plant using the plurality of DO setpoints and the airflow rates.

13. The system of claim 12, wherein the one or more processors are configured to perform the method according to any one of claims 1 to 11.

14. A non-transitory computer-readable storage medium comprising instructions that, when executed by one or more processors, cause the one or more processors to:
receive data for a wastewater treatment plant, the data being descriptive of water quality over a period of time;
develop a predictive model for future water quality based on the received data;
determine, based on the predictive model, a plurality of DO setpoints and airflow rates for the wastewater treatment plant; and
control an aeration system for the wastewater treatment plant using the plurality of DO setpoints and airflow rates.
